# EUROPEAN PATENT SPECIFICATION

(11) **EP 4 521 170 B1**
(45) Date of publication and mention of the grant of the patent: **29.04.2026**
(21) Application number: 23871479.4
(22) Date of filing: 07.08.2023
(51) Int. Cl.: G03G 15/02, F16C 13/00, G03G 15/00

(54) **CONDUCTIVE MEMBER FOR ELECTROPHOTOGRAPHIC DEVICES**
LEITFÄHIGES ELEMENT FÜR ELEKTROPHOTOGRAPHISCHE VORRICHTUNGEN
ÉLÉMENT CONDUCTEUR POUR DISPOSITIFS ÉLECTROPHOTOGRAPHIQUES

(30) Priority: 27.09.2022 JP 2022153206
(43) Date of publication of application: 12.03.2025
(73) Proprietor: Sumitomo Riko Company Limited, Komaki-shi, Aichi 485-8550 (JP)
(72) Inventor: MORITA, Akitoshi, Komaki-shi Aichi 485-8550 (JP); HORIUCHI, Takeru, Komaki-shi Aichi 485-8550 (JP); AKIRA, Naoki, Komaki-shi Aichi 485-8550 (JP)
(74) Representative: Becker, Eberhard
(86) International application number: PCT/JP2023/028675
(87) International publication number: WO 2024/070237

(56) References cited:
- JP-A- 2000 019 814
- JP-A- 2001 066 814
- JP-A- 2009 145 807
- JP-A- H09 325 563
- US-A1- 2011 292 149
- US-A1- 2020 310 266
- US-A1- 2022 244 673

## Description

### Technical Field

The present invention relates to a conductive member for electrophotographic equipment such as a charging roll or a developing roll, which is suitably used in electrophotographic equipment such as a copying machine, a printer, or a facsimile that uses electrophotography.

### Description of Related Art

A photosensitive drum is usually built into electrophotographic equipment such as a copying machine, a printer, or a facsimile that uses electrophotography, and provided therearound are a roll-shaped conductive member such as a charging roll, a developing roll, a transfer roll, or a toner supply roll, a dirt removing member such as a cleaning blade, and a belt-shaped conductive member such as a transfer belt or a fixing belt. Copying and printing using this type of electrophotographic equipment is carried out by forming an original image as an electrostatic latent image on a photosensitive drum, forming a toner image by attaching toner to the electrostatic latent image, and transferring the toner image onto a sheet of copy paper.

If dirt such as toner, toner additives, paper dust, or the like adheres to the surface of the conductive member, such a situation may cause an image defect. For example, when a charging roll is contaminated by toner or paper dust on the photosensitive drum, the charging performance decreases, the photosensitive drum is unable to be uniformly charged, and an image defect occurs. In recent years, as a cleaning blade is no longer installed due to the trend toward lower power consumption in equipment, the demand for dirt resistance has increased even further.

Countermeasures against such dirt include adding a modifier to the surface layer material to increase the water and oil repellency of the surface, or adding roughness-forming particles to the surface layer material to create surface irregularities.

In addition, in Patent Literature 1, in order to minimize adhesion of foreign matter such as toner, toner additives, or abrasive dust from the photosensitive drum, there has been proposed a charging roller having, as a surface layer, a nano-structure layer including multiple convex units with a columnar structure on the surface.

Furthermore, in Patent Literature 2, in order to minimize adhesion of aggregates (foreign matter) that occur during use, there has been proposed a charging roller having, as a surface layer, a nano-pattern layer including multiple groove-like convexities and concavities running parallel to one another. The groove-like convexities and concavities are formed by etching a microphase-separated structure of a lamellar structure, utilizing the difference in carbon density of the monomer units.

### Related Art

### Patent Literature

Patent Literature 1: Japanese Patent Application Laid-Open No. 2013-076862
Patent Literature 2: Japanese Patent Application Laid-Open No. 2013-076861
Another Patent Literature representing the related art is US 2022/244673 A1, which discloses a conductive member in which the size of each of the protrusions derived from the exposed portions of electroconductive particles is preferably 5.0 to 100.0 nm.

### SUMMARY

### Technical Problem

The forms in which dirt such as toner, toner additives, and paper dust adheres to the surface of a conductive member include superficial dirt in which the dirt simply adheres to the surface of the conductive member, as well as physical dirt in which the dirt is embedded in or sticks into the surface of the conductive member. Although the method of adding a modifier to a surface layer material can remove superficial dirt, it is difficult to sufficiently remove physical dirt that is embedded in the surface. Furthermore, in the method of adding roughness-forming particles to the surface layer material, it is difficult to form uniform surface irregularities due to the aggregation of particles. Furthermore, since the roughness-forming particles are too large compared to dirt, dirt tends to accumulate between convexities.

The surface layer of the charging roller in Patent Literature 1 is a nano-structure layer including multiple convex units of a columnar structure, and the surface that comes into contact with dirt such as toner is the flat surface of the tips of the convex units of a columnar structure. In this case, the surface layer of the charging roller of Patent Literature 1 has a large contact area with dirt, so that dirt tends to adhere to the surface layer.

The surface layer of the charging roller in Patent Literature 2 is a nano-pattern layer including multiple groove-like convexities and concavities formed by etching the microphase-separated structure of a lamellar structure, and has an uneven shape with a lamellar structure. The surface of the charging roller in Patent Literature 2 is formed with convex ridges and concave ridges to form an uneven shape, and the surface that comes into contact with dirt such as toner is the convex ridges, so that the contact area with the dirt is large and the dirt tends to adhere to the surface. In particular, adhesion of dirt such as small-sized toner additives and paper dust is more noticeable than dirt such as large-sized toner.

An object of the present invention is to provide a conductive member for electrophotographic equipment in which adhesion of toner and paper dust is minimized.

### Solution to the Problem

The conductive member for electrophotographic equipment according to the present invention includes an elastic layer and a surface layer formed on the outer peripheral surface of the elastic layer. Multiple convex units are formed on the outer peripheral surface of the surface layer, and a tip of the convex unit is formed of a curved surface. The height of the convex unit 1.0 nm or more and 10 nm or less, the width of the convex unit is 1.0 nm or more and 100 nm or less, and the size of the width of the convex unit relative to the interval between the convex units is 0.5 or more and 1.5 or less.

The convex unit may be hemispherical. The surface roughness Ra of the surface layer may be 0.5 nm or more and 10 nm or less. The interval between the convex units may be is 1.0 nm or more and 100 nm or less. The surface layer may be made of a styrene-butadiene block copolymer. A styrene content of the styrene-butadiene block copolymer may be 71% by mass or more and 85% by mass or less, a styrene block copolymer content of the styrene-butadiene block copolymer may be 40 mol % or more and 75 mol % or less. The surface layer may contain carbon black. The surface layer may be formed of a self-organization film of a diblock copolymer. The diblock copolymer may have a structure in which a phase made of one block polymer component and a phase made of the other block polymer component are disposed side by side in the thickness direction. The diblock copolymer may be a styrene-butadiene block copolymer, and a phase made of a styrene block polymer component may be disposed on a phase made of a butadiene block polymer component. The convex unit may be constituted by the phase made of the styrene block polymer component of the diblock copolymer.
(1) The conductive member for electrophotographic equipment according to the present invention includes an elastic layer and a surface layer formed on the outer peripheral surface of the elastic layer. Multiple convex units are formed on the outer peripheral surface of the surface layer, and a tip of the convex unit is formed of a curved surface. The height of the convex unit 1.0 nm or more and 10 nm or less, the width of the convex unit is 1.0 nm or more and 100 nm or less, and the size of the width of the convex unit relative to the interval between the convex units is 0.5 or more and 1.5 or less.
(2) In the above (1), the convex unit may be hemispherical.
(3) In the above (1) or (2), the surface roughness Ra of the surface layer may be 0.5 nm or more and 10 nm or less.
(4) In any one of (1) to (3) above, the interval between the convex units may be 1.0 nm or more and 100 nm or less.
(5) In any one of (1) to (4) above, the surface layer may be made of a styrene-butadiene block copolymer.
(6) In the above (5), a styrene content of the styrene-butadiene block copolymer may be 71% by mass or more and 85% by mass or less, and a styrene block copolymer content of the styrene-butadiene block copolymer may be 40 mol % or more and 75 mol % or less.
(7) In any one of (1) to (6) above, the surface layer may contain carbon black.
(8) In any one of (1) to (7) above, the surface layer may be formed of a self-organization film of a diblock copolymer.
(9) In the above (8), the diblock copolymer may have a structure in which a phase made of one block polymer component and a phase made of the other block polymer component are disposed side by side in the thickness direction.
(10) In the above (9), the diblock copolymer may be a styrene-butadiene block copolymer, and a phase made of a styrene block polymer component may be disposed on a phase made of a butadiene block polymer component.
(11) In the above (10), the convex unit may be constituted by the phase made of the styrene block polymer component of the diblock copolymer.

### Effects

According to the conductive member for electrophotographic equipment of the present invention, multiple convex units are formed on the outer peripheral surface of the surface layer, the tip of the convex unit is formed of a curved surface, the height of the convex unit is 1.0 nm or more and 10 nm or less, and the width of the convex unit is 1.0 nm or more and 100 nm or less. Since the size of the width of the convex unit relative to the interval between the convex units is 0.5 or more and 1.5 or less, adhesion of toner and paper dust is minimized.

When the convex unit is hemispherical, the tip of the convex unit is a curved surface, the contact area with dirt such as toner and paper dust is small, which is exemplary in terms of the effect of minimizing adhesion of dirt such as toner and paper dust.

When the surface roughness Ra of the surface layer is 0.5 nm or more and 10 nm or less, the roughness is appropriate for minimizing adhesion of dirt such as toner and paper dust, and is therefore exemplary in terms of the effect of minimizing adhesion of dirt such as toner and paper dust.

When the interval between the convex units is 1.0 nm or more and 100 nm or less, multiple convex units are uniformly disposed on the outer peripheral surface of the surface layer, which is exemplary in terms of the effect of minimizing adhesion of dirt such as toner and paper dust.

When the surface layer is made of a styrene-butadiene block copolymer, by self-organization of the block copolymer, multiple fine and uniform convex units can be formed on the outer peripheral surface of the surface layer. Such a way provides an exemplary effect of minimizing adhesion of dirt such as toner and paper dust.

A styrene content of the styrene-butadiene block copolymer is 71% by mass or more and 85% by mass or less, and when a styrene block copolymer content of the styrene-butadiene block copolymer is 40 mol % or more and 75 mol % or less, convex units of an appropriate size are easily formed. In addition, it is difficult to form lamellar structures (fine patterns like wrinkles). Such a way provides an exemplary effect in removing relatively large dirt such as toner. In addition, the contact area with relatively small dirt such as paper dust and toner additives is reduced, which is exemplary in terms of the effect of minimizing adhesion of small dirt and removing the small dirt.

When containing carbon black, the surface layer can exhibit exemplary electrical conductivity.

When the surface layer is made of a self-organization film of a diblock copolymer, multiple fine and uniform convex units can be formed on the outer peripheral surface of the surface layer. Such a way provides an exemplary effect of minimizing adhesion of dirt such as toner and paper dust.

When the diblock copolymer has a structure in which a phase made of one block polymer component and a phase made of the other block polymer component are disposed side by side in the thickness direction, by self-organization of the block copolymer, multiple fine and uniform convex units can be formed on the outer peripheral surface of the surface layer. Such a way provides an exemplary effect of minimizing adhesion of dirt such as toner and paper dust.

When the diblock copolymer is a styrene-butadiene block copolymer, and a phase made of a styrene block polymer component is disposed on a phase made of a butadiene block polymer component, by self-organization of the block copolymer, multiple fine and uniform convex units can be formed on the outer peripheral surface of the surface layer. Such a way provides an exemplary effect of minimizing adhesion of dirt such as toner and paper dust.

When the convex unit is formed of the phase made of the styrene block polymer component of the diblock copolymer, by self-organization of the block copolymer, multiple fine and uniform convex units can be formed on the outer peripheral surface of the surface layer. Such a way provides an exemplary effect of minimizing adhesion of dirt such as toner and paper dust.

### BRIEF DESCRIPTION OF THE DRAWINGS

FIG. 1A is a schematic external view of a conductive roll for electrophotographic equipment according to an embodiment of the present invention, and FIG. 1B is a radial cross-sectional view thereof.
FIG. 2 is an enlarged schematic diagram of a cross section of a surface layer.
FIG. 3 is a schematic diagram illustrating self-organization of a surface layer material.
FIG. 4A is a schematic external view of a conductive belt for electrophotographic equipment according to an embodiment of the present invention, and FIG. 4B is a radial cross-sectional view thereof.
FIGS. 5A to 5D are enlarged photographs (1 µm×1 µm) of the surface layer of the example and the comparative example.

### DESCRIPTION OF EMBODIMENTS

A conductive member for electrophotographic equipment (hereinafter, sometimes simply referred to as the conductive member) according to the present invention will be described in detail. The conductive member includes an elastic layer and a surface layer formed on the outer peripheral surface of the elastic layer. The conductive member is suitable for use as a conductive roll such as a charging roll, a developing roll, a transfer roll, or a toner supply roll used in electrophotographic equipment such as a copying machine, a printer, or a facsimile that uses electrophotography or an endless belt (conductive belt) such as an intermediate transfer belt, a paper transfer transport belt, or a fixing belt.

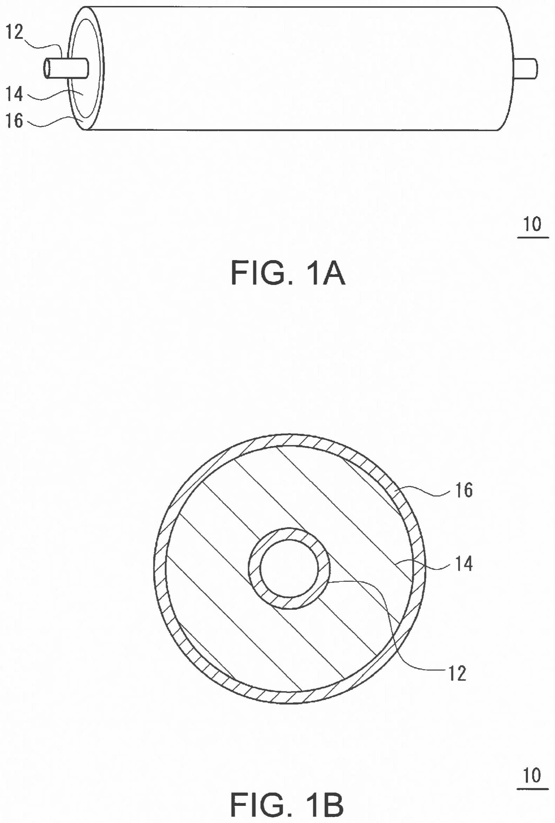

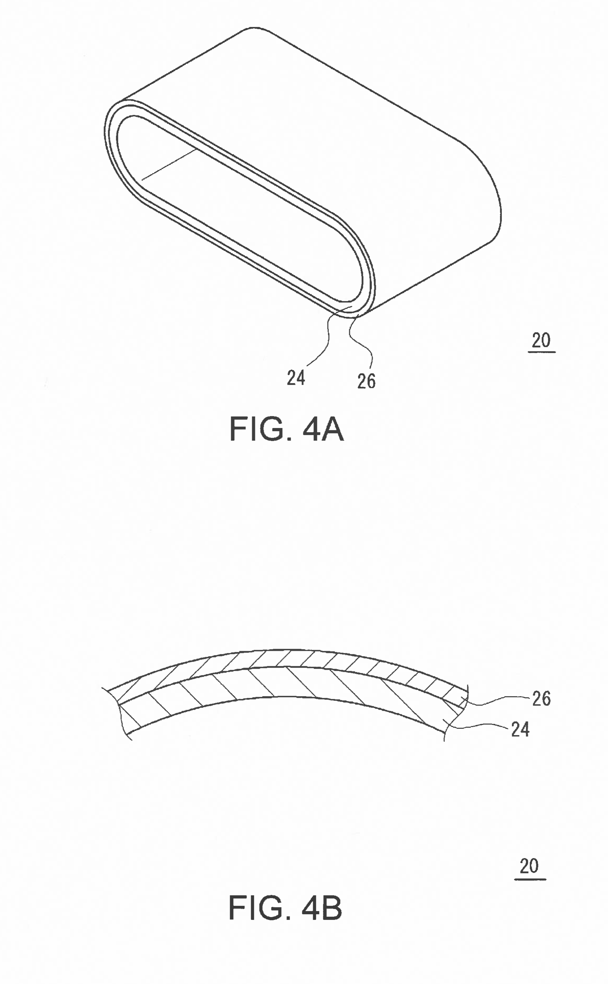

FIGS. 1A and 1B show a conductive roll according to an embodiment of the present invention. FIG. 2 shows an enlarged schematic diagram of a cross section of the surface layer of the conductive roll. FIG. 3 shows a schematic diagram illustrating the self-organization of the surface layer material. FIGS. 4A and 4B show a conductive belt according to an embodiment of the present invention.

A conductive roll 10 includes a shaft 12, an elastic layer 14 formed on the outer peripheral surface of the shaft 12, and a surface layer 16 formed on the outer peripheral surface of the elastic layer 14. The elastic layer 14 is a layer (base layer) that serves as the base of the conductive roll 10. The surface layer 16 is a layer that appears on the surface of the conductive roll 10.

The shaft 12 is not particularly limited as long as the shaft 12 is conductive. Specifically, examples of the material include a core bar made of a solid or hollow body made of metal such as iron, stainless steel, or aluminum. The surface of the shaft 12 may be coated with an adhesive, a primer, or the like, if needed. The adhesive, primer, etc. may be made conductive as needed.

The elastic layer 14 contains crosslinked rubber. The elastic layer 14 is formed from a conductive rubber composition containing uncrosslinked rubber. The crosslinked rubber can be obtained by crosslinking the uncrosslinked rubber. The uncrosslinked rubber may be polar rubber or non-polar rubber.

The polar rubber is rubber having a polar group, and examples of the polar group include a chloro group, a nitrile group, a carboxyl group, and an epoxy group. Specifically, examples of the polar rubber include hydrin rubber, nitrile rubber (NBR), urethane rubber (U), acrylic rubber (a copolymer of acrylic ester and 2-chloroethyl vinyl ether, ACM), chloroprene rubber (CR), and epoxidized natural rubber (ENR). Among the polar rubber, hydrin rubber and nitrile rubber (NBR) are more preferable from the viewpoint that the volume resistivity tends to be particularly low.

Examples of the hydrin rubber include a homopolymer (CO) of epichlorohydrin, an epichlorohydrin-ethylene oxide copolymer (ECO), an epichlorohydrin-allyl glycidyl ether binary copolymer (GCO), and an epichlorohydrin-ethylene oxide-allyl glycidyl ether terpolymer (GECO).

The urethane rubber may be polyether type urethane rubber having an ether bond in the molecule. The polyether type urethane rubber may be produced by reacting a polyether having hydroxyl groups at both ends with a diisocyanate. The polyether is not particularly limited, but examples thereof include a polyethylene glycol and a polypropylene glycol. The diisocyanate is not particularly limited, but examples thereof include a tolylene diisocyanate and a diphenylmethane diisocyanate.

Examples of the non-polar rubber include silicone rubber (Q), isoprene rubber (IR), natural rubber (NR), styrene butadiene rubber (SBR), and butadiene rubber (BR). Among the non-polar rubber, silicone rubber is more preferable from the viewpoint of low hardness and resistance to settling (exemplary elastic recovery).

The elastic layer 14 may contain at least one of isoprene rubber, nitrile rubber, and hydrin rubber. When the elastic layer 14 contains at least one of isoprene rubber, nitrile rubber, and hydrin rubber, the compression set is small, the occurrence of a streak image corresponding to a deformed unit when the conductive 10 is set is suppressed.

Examples of a crosslinking agent include a sulfur crosslinking agent, a peroxide crosslinking agent, and a dechlorination crosslinking agent. The crosslinking agents may be used alone or in combination of two or more kinds.

Examples of the sulfur crosslinking agent include conventionally known sulfur crosslinking agents such as powdered sulfur, precipitated sulfur, colloidal sulfur, surface-treated sulfur, insoluble sulfur, sulfur chloride, a thiuram vulcanization accelerator, and a polymeric polysulfide.

Examples of the peroxide crosslinking agent include conventionally known peroxide crosslinking agents such as a peroxyketal, a dialkyl peroxide, a peroxy ester, a ketone peroxide, a peroxydicarbonate, a diacyl peroxide, and a hydroperoxide.

The dechlorinating crosslinking agent may include a dithiocarbonate compound. More specifically, examples include quinoxaline-2,3-dithiocarbonate, 6-methylquinoxaline-2,3-dithiocarbonate, 6-isopropylquinoxaline-2,3-dithiocarbonate and 5,8-dimethylquinoxaline-2,3-dithiocarbonate.

The amount of the crosslinking agent to be blended is preferably within a range of 0.1 to 2 parts by mass, more preferably within a range of 0.3 to 1.8 parts by mass, and even more preferably within a range of 0.5 to 1.5 parts by mass, per 100 parts by mass of the uncrosslinked rubber, from the viewpoint of preventing bleeding.

When a dechlorination crosslinking agent is used as the crosslinking agent, a dechlorination crosslinking accelerator may be used in combination. The dechlorination crosslinking accelerator may be 1,8-diazabicyclo(5,4,0)undecene-7 (hereinafter abbreviated as DBU) or a weak acid salt thereof. The dechlorination crosslinking accelerator may be used in the form of DBU, but is preferably used in the form of a weak acid salt thereof from the viewpoint of ease of handling. Examples of the weak acid salt of DBU include a carbonate, stearate, a 2-ethylhexyl salt, benzoate, a salicylate, a 3-hydroxy-2-naphthoic acid salt, a phenol resin salt, a 2-mercaptobenzothiazole salt, and a 2-mercaptobenzimidazole salt.

The content of the dechlorination crosslinking accelerator is preferably within a range of 0.1 to 2 parts, more preferably in a range of 0.3 to 1.8 parts by mass, and even more preferably in a range of 0.5 to 1.5 parts by mass, per 100 parts by mass of the uncrosslinked rubber, from the viewpoint of preventing bleeding.

A conductive agent may be blended into the elastic layer 14 to impart electrical conductivity. The conductive agent may be an electronic conductive agent or an ionic conductive agent. Examples of the electronic conductive agent include carbon black, graphite, and a conductive metal oxide. Examples of the conductive metal oxide include a conductive titanium oxide, a conductive zinc oxide, and a conductive tin oxide. The ionic conductive agent may include a quaternary ammonium salt, a borate, a surfactant, and the like. Furthermore, various additives may be appropriately added to the elastic layer 14 as needed. Examples of the additives include lubricants, vulcanization accelerators, antioxidants, light stabilizers, viscosity modifiers, processing aids, flame retardants, plasticizers, foaming agents, fillers, dispersants, defoamers, pigments, and mold release agents.

The elastic layer 14 can be adjusted to predetermined volume resistivity depending on the type of crosslinked rubber, the amount of the ionic conductive agent to be blended, the electronic conductive agent blended, and the like. The volume resistivity of the elastic layer 14 may be appropriately set within a range of 10² to 10¹⁰ Ω·cm, 10³ to 10⁹ Ω·cm, or 10⁴ to 10⁸ Ω·cm depending on the application.

The thickness of the elastic layer 14 is not particularly limited, and may be appropriately set within a range of 0.1 to 10 mm depending on the application.

The surface layer 16 functions as a protective layer for the roll surface. Multiple convex units 18 are formed on the outer peripheral surface of the surface layer 16. The convex unit 18 is hemispherical, and the tip of the convex unit 18 is configured with a curved surface. A height h of the convex unit 18, a width W of the convex unit 18, and the size of the width W of the convex unit 18 relative to an interval d between the convex units 18 are within a specific range. In this way, the surface layer 16 has multiple fine and uniform convex units 18 on the outer peripheral surface thereof, which slides off dirt such as toner, toner additives, and paper dust, and minimizes adhesion of dirt (toner and paper dust).

The height h of the convex unit 18 is 1.0 nm or more and 10 nm or less. If the height h of the convex unit 18 is less than 1.0 nm, the convex unit 18 is too small, reducing the effect of removing relatively large dirt (about 5 µm) such as toner. On the other hand, if the height h of the convex unit 18 exceeds 10 nm, the convex unit 18 is too large, the contact area with relatively small dirt (about 100 nm) such as paper dust and toner additives becomes too large, and small dirt tends to adhere, reducing the effect of removing the small dirt. From the above viewpoint, the height h of the convex unit 18 is preferably 1.5 nm or more, more preferably 2.0 nm or more, and even more preferably 2.5 nm or more. Moreover, the height h of the convex unit 18 is preferably 9.0 nm or less, more preferably 8.0 nm or less, and even more preferably 7.0 nm or less.

The width W of the convex unit 18 represents the diameter (outer diameter) of the hemispherical convex unit 18. The width W of the convex unit 18 is 1.0 nm or more and 100 nm or less. If the width W of the convex unit 18 is less than 1.0 nm, the convex unit 18 is too small, reducing the effect of removing relatively large dirt such as toner. On the other hand, if the width W of the convex unit 18 exceeds 100 nm, the convex unit 18 is too large, the contact area with relatively small dirt such as paper dust and toner additives becomes too large, and small dirt tends to adhere, reducing the effect of removing the small dirt. From the above viewpoint, the width W of the convex unit 18 is preferably 5.0 nm or more, more preferably 10 nm or more, even more preferably 20 nm or more, and particularly preferably 40 nm or more. Moreover, the width W of the convex unit 18 is preferably 90 nm or less, more preferably 80 nm or less, and even more preferably 70 nm or less.

The interval d between the convex units 18 may be 1.0 nm or more and 100 nm or less. When the interval d between the convex units 18 is less than 1.0 nm, the convex units 18 tend to be connected together to form convex ridges, the contact area with relatively small dirt such as paper dust and toner additives becomes too large, and small dirt tends to adhere, reducing the effect of removing the small dirt. On the other hand, if the interval d between the convex units 18 exceeds 100 nm, the interval d between the convex units 18 is too large, the number of the convex units 18 is small, and the effect of removing dirt is reduced. From the above viewpoint, the interval d between the convex units 18 is preferably 5.0 nm or more, more preferably 10 nm or more, even more preferably 20 nm or more, and particularly preferably 40 nm or more. The interval d between the convex units 18 is preferably 90 nm or less, more preferably 80 nm or less, and even more preferably 70 nm or less.

The size of the width W of the convex unit 18 relative to the interval d between the convex units 18 may be 0.5 or more and 1.5 or less. If the size of the width W of the convex unit 18 relative to the interval d between the convex units 18 is less than 0.5, the interval d between the convex units 18 is too large, the number of convex units 18 is small, and the effect of removing dirt is reduced. On the other hand, if the size of the width W of the convex unit 18 relative to the interval d between the convex units 18 exceeds 1.5, the convex units 18 tend to be connected together to form convex ridges, the contact area with relatively small dirt such as paper dust and toner additives becomes too large, and small dirt tends to adhere, reducing the effect of removing the small dirt. From the above viewpoint, the size of the width W of the convex unit 18 relative to the interval d between the convex units 18 is preferably 0.6 or more, more preferably 0.7 or more, and even more preferably 0.8 or more. Furthermore, the size of the width W of the convex unit 18 relative to the interval d between the convex units 18 is preferably 1.4 or less, more preferably 1.3 or less, and even more preferably 1.2 or less.

Surface roughness Ra of the surface layer 16 may be 0.5 nm or more and 10 nm or less. If the surface roughness Ra is less than 0.5 nm, the surface roughness is too small, reducing the effect of removing relatively large dirt such as toner. On the other hand, if the surface roughness Ra exceeds 10 nm, the surface roughness is too large, the contact area with relatively small dirt such as paper dust and toner additives becomes too large, and small dirt tends to adhere, reducing the effect of removing the small dirt. When the surface roughness Ra is 0.5 nm or more and 10 nm or less, the roughness is appropriate for minimizing adhesion of dirt such as toner and paper dust, and is therefore exemplary in terms of the effect of minimizing adhesion of dirt such as toner and paper dust. From the above viewpoint, the surface roughness Ra is preferably 0.8 nm or more, and more preferably 2.0 nm or more. In addition, the surface roughness Ra is preferably 5.0 nm or less, more preferably 4.0 nm or less, and even more preferably 3.0 nm or less.

The height h of the convex unit 18, the width W of the convex unit 18, the interval d between the convex units 18, and the surface roughness Ra can be determined by performing image analysis using a height image taken by a scanning probe microscope (SPM). The interval d between the convex units 18 can be obtained from the length between the highest points of adjacent convex units 18. The surface roughness Ra is the arithmetic mean roughness. Each of values is expressed as an average of SPM height images obtained from two arbitrary locations on the surface layer 16, and then values are calculated at three arbitrary points for each of the locations.

The fine and uniform uneven structure of the surface layer 16 may be formed by various methods, for example, by self-organization of a diblock copolymer. In this way, multiple optimal convex units 18 may be effectively formed, resulting in a fine and uniform uneven structure. The diblock copolymer is preferably a combination of a flexible polymer and a rigid polymer. The flexible polymer may include butadiene, isoprene, a polyethylene oxide, polyacrylic acid, and the like. The rigid polymer may include styrene, polymethyl methacrylate, and the like. Examples of the diblock copolymer include a styrene-butadiene block copolymer and a styrene-isoprene diblock copolymer. Of the examples, the styrene-butadiene block copolymer is particularly preferred.

A styrene content of the styrene-butadiene block copolymer may be 71% by mass or more and 85% by mass or less, and a styrene block copolymer content of the styrene-butadiene block copolymer may be 40 mol % or more and 75 mol % or less. When the styrene content is 71% by mass or more and the styrene block copolymer content is 40 mol % or more, it is easy to form the convex units 18 that are not too small and have an appropriate size. Such a way provides an exemplary effect in removing relatively large dirt such as toner. Furthermore, when the styrene content is 85% by mass or less and the styrene block copolymer content is 75 mol % or less, it is easy to form the convex units 18 that are not too large and have an appropriate size. In addition, it is difficult to form lamellar structures (fine patterns like wrinkles). Such a way reduces the contact area with relatively small dirt such as paper dust and toner additives, and is exemplary in terms of the effect of minimizing adhesion of small dirt and removing the small dirt. From the above viewpoint, it is more preferable that the styrene content is 73% by mass or more and the styrene block copolymer content is 45 mol % or more, and it is even more preferable that the styrene content is 75% by mass or more and the styrene block copolymer content is 50 mol % or more. From the above viewpoint, it is more preferable that the styrene content is 80% by mass or less and the styrene block copolymer content is 70 mol % or less, and it is even more preferable that the styrene content is 78% by mass or less and the styrene block copolymer content is 65 mol % or less. The styrene content can be calculated by NMR.

The molecular weight of the styrene-butadiene block copolymer may be Mw 80,000 or more and Mw 180,000 or less. When the molecular weight of the styrene-butadiene block copolymer is within the above range, it is easy to form the convex units 18 of an optimum size. From the viewpoint, the molecular weight of the styrene-butadiene block copolymer is more preferably Mw 100,000 or more and Mw 160,000 or less, and even more preferably Mw 120,000 or more and Mw 160,000 or less. The molecular weight can be calculated by GPC.

By self-organization of diblock copolymers of appropriate composition, as shown in FIG. 3, in the surface layer 16 of the diblock copolymer, a phase 17a made of one block polymer component and a phase 17b made of the other block polymer component are disposed side by side in the thickness direction. For example, in the case of a styrene-butadiene block copolymer, the phase 17a made of a butadiene block polymer component is disposed below in the thickness direction, and the phase 17b made of a styrene block polymer component is disposed thereon. The convex unit 18 is constituted by the phase 17b made of the styrene block polymer component of the diblock copolymer.

The surface layer material may be composed of a paint containing a diblock copolymer. The surface layer 16 can be formed by applying a paint, which is a surface layer material, onto the outer peripheral surface of the elastic layer 14 and drying the paint to cause self-aggregation and to have multiple fine convex units 18 uniformly.

To impart electrical conductivity to the surface layer 16, a conductive agent such as carbon black, graphite, a conductive titanium oxide, a conductive zinc oxide, a conductive tin oxide, or an ionic conductive agent (a quaternary ammonium salt, a borate, a surfactant, etc.) may be appropriately added. If needed, various additives may be appropriately added. Furthermore, to ensure surface roughness, roughness-forming particles may be added to the surface layer 16, but it is not needed to add roughness-forming particles.

The surface layer 16 preferably contains carbon black. When containing carbon black, the surface layer 16 can exhibit exemplary electrical conductivity. In the surface layer 16, the content of carbon black is preferably 5 parts by mass or more and 50 parts by mass or less per 100 parts by mass of the styrene-butadiene block copolymer, and more preferably 10 parts by mass or more and 40 parts by mass or less.

The roughness-forming particles form surface irregularities on the surface layer 16. Examples of the roughness-forming particles include resin particles and silica particles. Examples of the resin particles include urethane particles, silicone particles, and acrylic particles. The average particle size of the roughness-forming particles is preferably within the range of 3 to 50 µm. The average particle size of the roughness-forming particles can be calculated from the median size using a laser diffraction particle size distribution measuring device.

The thickness of the surface layer 16 is not particularly limited, but is preferably within the range of 0.01 to 100 µm, more preferably within the range of 0.1 to 20 µm, and even more preferably in the range of 0.3 to 10 µm. The volume resistivity of the surface layer 16 is preferably within the range of 10⁷ to 10¹² Ω·cm, more preferably within the range of 10⁸ to 10¹¹ Ω·cm, and even more preferably within the range of 10⁹ to 10¹⁰ Ω·cm.

The conductive roll 10 can be manufactured, for example, as follows. First, the shaft 12 is coaxially disposed in the hollow unit of a roll molding die, and a rubber composition is injected, heated and cured, and then the composition is demolded or alternatively, the elastic layer 14 is formed on the outer periphery of the shaft 12 by extruding the rubber composition onto the surface of the shaft 12. Next, a surface layer forming composition is applied to the outer periphery of the formed elastic layer 14 and, if needed, a heat treatment is performed to form the surface layer 16. In this way, the conductive roll 10 can be manufactured.

The surface layer forming composition contains the above-mentioned main material, a conductive agent, and other additives which are added as needed. Other additives include crosslinking agents for the polymer components, leveling agents, surface modifiers, and the like. From the viewpoint of adjusting the viscosity, the surface layer forming composition may appropriately contain a solvent such as an organic solvent such as methyl ethyl ketone (MEK), toluene, acetone, ethyl acetate, butyl acetate, methyl isobutyl ketone (MIBK), THF, or DMF, or a water-soluble solvent such as methanol or ethanol. As the coating method, various coating methods such as roll coating, dipping, spray coating, etc. can be used.

According to the conductive roll 10 having the above-mentioned configuration, multiple convex units 18 are formed on the outer peripheral surface of the surface layer 16, the convex unit 18 is hemispherical, the tip of the convex unit 18 is formed into a curved surface, and the height h of the convex unit 18, the width W of the convex unit 18, and the size of the width W of the convex unit 18 relative to the interval d between the convex units 18 are within a specific range. In this way, the surface layer 16 has multiple fine and uniform nano-order convex units 18 on the outer peripheral surface thereof, which slides off dirt such as toner, toner additives, and paper dust, and minimizes adhesion of dirt (toner and paper dust).

Next, as shown in FIGS. 4A and 4B, a conductive belt (endless belt) 20 includes an elastic layer 24 and a surface layer 26 formed on the outer peripheral surface of the elastic layer 24. The elastic layer 24 is a layer (base layer) that serves as the base of the conductive belt 20. The surface layer 26 is a layer that appears on the surface of the conductive belt 20.

The elastic layer 24 has the same configuration as the elastic layer 14 of the conductive roll 10. The surface layer 26 has the same configuration as the surface layer 16 of the conductive roll 10. The conductive belt 20 also provides the same effects as the conductive roll 10.

Although the embodiments of the present invention have been described above, the present invention is not limited to the above-described embodiments, and various modifications can be made without departing from the spirit of the present invention.

For example, in the above embodiment, the convex unit 18 is shown to be hemispherical, but the convex unit 18 is not limited to being hemispherical as long as the tip of the convex unit 18 has a structure with a curved surface. Moreover, the hemispherical shape may be a hemisphere of a true sphere or a hemisphere of an elliptical sphere.

In addition, for example, in the above embodiment, the surface layer 16 is in contact with the elastic layer 14 and is configured as a single layer, but another layer may be present between the surface layer 16 and the elastic layer 14. The another layer may include a resistance adjusting layer. Moreover, the surface layer 16 may be made up of two layers. The lower layer of the two-layer surface layer may be, for example, a layer containing roughness-forming particles, and the upper layer may be a layer having the above-mentioned microstructure and not containing roughness-forming particles. The polymer component of the lower layer may be the same as the polymer component of the upper layer, or may be different from the polymer component of the upper layer such as polyamide, acrylic resin, urethane resin, silicone resin, or fluoropolymer.

### Example

Hereinafter, the present invention will be described in detail using Examples and Comparative Examples.

(Example)

### <Preparation of Composition for Forming Surface Layer>

100 parts by mass of a styrene-butadiene block copolymer was added to 495 parts by mass of MEK together with 30 parts by mass of carbon black, the mixture was dissolved in a steam oven at 50° C for 3 hours to prepare a composition for forming a surface layer.

### <Surface Formation>

The composition for forming the surface layer was applied onto a PET sheet (30 cm×30 cm) by a bar coating method to a thickness of 100 µm (coating size: 20 cm×10 cm). Next, the coating was air-dried at room temperature for about 1 hour to remove the solvent, forming a film with a thickness of about 20 µm. In this manner, the surface layer was formed.

### (Comparative Examples 1-2)

The surface layer was formed in the same manner as in the example.

The materials used in the composition for forming the surface layer are as follows.
- Styrene-butadiene block copolymer <1>: Asahi Kasei "Asaflex 825" (styrene content 78% by mass, styrene block copolymer content 50 mol %, molecular weight Mw 140,000)
- Styrene-butadiene block copolymer <2>: Asahi Kasei "Asaflex 840" (styrene content 76% by mass, styrene block copolymer content 56 mol %, molecular weight Mw 150,000)
- Styrene-butadiene block copolymer <3>: Asahi Kasei "Asaflex 805" (styrene content 77% by mass, styrene block copolymer content 76 mol %, molecular weight Mw 105,000)
- Styrene-butadiene block copolymer <4>: Asahi Kasei "Asaflex 830" (styrene content 70% by mass, styrene block copolymer content 55 mol %, molecular weight Mw 135,000)
- Carbon black: Lion "Ketjen EC300"

The surface microstructure of each of the prepared surface layers was analyzed. Further, a toner adhesion test and a paper dust/additive adhesion test were carried out on each of the surface layers. The measurement and evaluation methods are as follows. The results are shown in the table.

### (Analysis of Surface Microstructure)

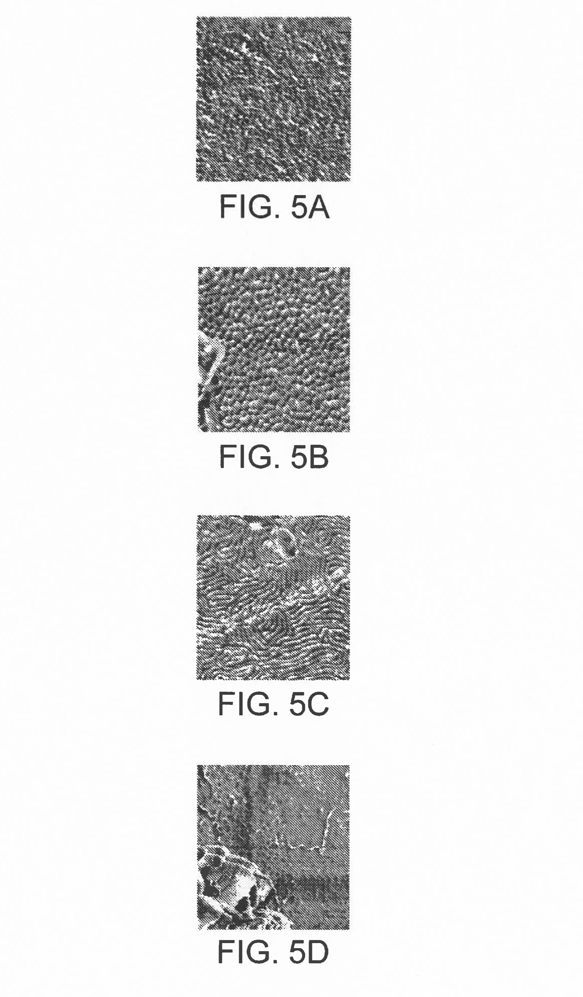

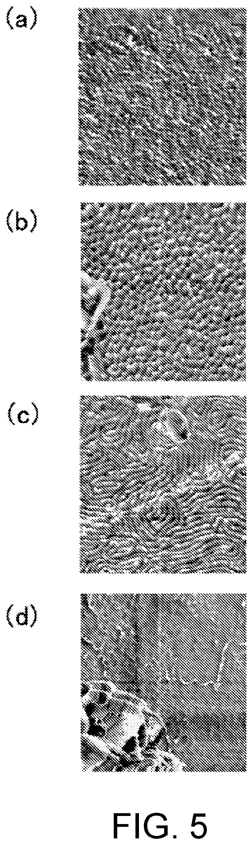

The height of the convex unit, the width (diameter) of the convex unit, the interval between the convex units, and the surface roughness Ra were determined by image analysis using height images taken by a scanning probe microscope (SPM). The interval between the convex units was determined from the length between the highest points of adjacent convex units. The surface roughness Ra is the arithmetic mean roughness. Each of values was expressed as an average of SPM height images obtained from two arbitrary points on the prepared film, and values were calculated at three arbitrary points per point. Scanning probe microscope (SPM) photographs are shown in FIGS. 5A to 5D. FIG. 5A shows Example 1, FIG. 5B shows Example 2, FIG. 5C shows Comparative Example 1, and FIG. 5D shows Comparative Example 2.

### (Toner Adhesion Test)

The entire surface of each of the prepared surface layers was dusted with toner (size: about 5 µm), and centrifuged at 12,000 rpm. After the centrifugation, the surface of the surface layer was observed under a microscope, and the area of the portion where the toner was adhered was detected using ImageJ, and was taken as the toner adhesion rate. A toner adhesion rate of 25% or less was rated "O", and a toner adhesion rate of 26% or more was rated "×".

### (Paper Dust and Additive Adhesion Test)

Calcium carbonate of 100 nm or less was used to simulate paper dust, and magnesium oxide of 100 nm or less was used to simulate a toner external additive. The entire surface of each of the prepared surface layers was sprinkled with calcium carbonate and magnesium oxide, the surface was covered with a PET sheet (thickness: 130 µm), and then a roller with a load of 5 kg was made to reciprocate 10 times on the PET sheet to apply a physical load. The PET sheet was peeled off to obtain a sample, and air was blown onto the sample from a distance of 10 cm. After the air blowing, the surface of the surface layer was observed with a laser microscope. The area of the portion where dirt was adhered was detected using ImageJ, and was taken as the paper dust/additive adhesion rate. A paper dust/additive adhesion rate of 18% or less was rated "O", and a paper dust/additive adhesion rate of 19% or more was rated "×".

**[Table 1]**

| | | Example | | Comparative Example | |
|---|---|---|---|---|---|
| | | 1 | 2 | 1 | 2 |
| Material Composition | Copolvmer | <1> | <2> | <3> | <4> |
| | Styrene content (% by mass) | 78 | 76 | 77 | 70 |
| | Styrene block copolymer content (mol %) | 50 | 56 | 76 | 55 |
| | Molecular weight (Mw) | 140,000 | 150,000 | 105,000 | 135,000 |
| Surface Microstructure | Phase-separated structure | Convex unit | Convex unit | Lamellar structure | Unknown |
| | Height of convex unit (nm) | 2.3 | 7.0 | 3.6 | <1 |
| | Width (diameter) of convex unit (nm) | 47.0 | 55.4 | 35.8 | <1 |
| | Interval between convex units (nm) | 48.3 | 56.3 | 33.9 | <1 |
| | Convex unit width/interval ratio | 1.0 | 1.0 | 1.1 | 1.0 |
| | Surface roughness (Ra) (nm) | 1.2 | 2.3 | 1.5 | <1 |
| Evaluation | Toner dirt | ○ | ○ | ○ | × |
| | Paper dust/additives dirt | ○ | ○ | × | ○ |

In Comparative Example 1, a block copolymer was used as the surface layer material, and as shown in FIG. 5C, a lamellar structure was formed on the surface. For this reason, the contact area with relatively small dirt such as paper dust and toner additives becomes large, and it is less effective in removing small dirt. In Comparative Example 2, a block copolymer is used as the surface layer material. However, as shown in FIG. 5D and Table 1, the size of the convex unit is too small, and it is less effective in removing relatively large dirt such as toner.

In contrast, in the embodiment, a block copolymer is used as the surface layer material, as shown in FIGS. 5A and 5B, multiple convex units are formed on the surface of the surface layer, and each of the convex units is hemispherical with a tip of a curved surface. In addition, the height of the convex unit, the width (diameter) of the convex unit, and the size of the width of the convex unit relative to the interval between the convex units are within a specific range. Therefore, it is highly effective in removing both relatively large dirt such as toner, and relatively small dirt such as paper dust and toner additives.

Although the embodiments and examples of the present invention have been described above, the present invention is not limited to the above-described embodiments and examples, and various modifications can be made without departing from the scope of the appended claims.

### Reference Signs List

10: Conductive roll
12: Shaft
14: Elastic layer
16: Surface layer
18: Convex unit
20: Conductive belt
24: Elastic layer
26: Surface layer
h: Height of convex unit
W: Width of convex unit
d: Interval between convex units
17a: Phase made of butadiene block polymer component
17b: Phase made of styrene block polymer component

## Claims

1. A conductive member (10, 20) for electrophotographic equipment, comprising:
an elastic layer (14, 24) and a surface layer (16, 26) formed on an outer peripheral surface of the elastic layer (14, 24),
a plurality of convex units (18) being formed on an outer peripheral surface of the surface layer (16, 26),
a tip of the convex unit (18) being formed of a curved surface,
a height (h) of the convex unit (18) being 1.0 nm or more and 10 nm or less,
a width (W) of the convex unit (18) being 1.0 nm or more and 100 nm or less, and
a size of the width (W) of the convex unit (18) relative to an interval (d) between the convex units (18) being 0.5 or more and 1.5 or less.

2. The conductive member (10, 20) for electrophotographic equipment according to claim 1, wherein the convex unit (18) is hemispherical.

3. The conductive member (10, 20) for electrophotographic equipment according to claim 1 or 2, wherein surface roughness, Ra, of the surface layer (16, 26) is 0.5 nm or more and 10 nm or less.

4. The conductive member (10, 20) for electrophotographic equipment according to any one of claims 1 to 3, wherein the interval (d) between the convex units (18) is 1.0 nm or more and 100 nm or less.

5. The conductive member (10, 20) for electrophotographic equipment according to any one of claims 1 to 4, wherein the surface layer (16, 26) is made of a styrene-butadiene block copolymer.

6. The conductive member (10, 20) for electrophotographic equipment according to claim 5, wherein a styrene content of the styrene-butadiene block copolymer is 71% by mass or more and 85% by mass or less, and a styrene block copolymer content of the styrene-butadiene block copolymer is 40 mol % or more and 75 mol % or less.

7. The conductive member (10, 20) for electrophotographic equipment according to any one of claims 1 to 6, wherein the surface layer (16, 26) contains carbon black.

8. The conductive member (10, 20) for electrophotographic equipment according to any one of claims 1 to 7, wherein the surface layer (16, 26) is formed of a self-organization film of a diblock copolymer.

9. The conductive member (10, 20) for electrophotographic equipment according to claim 8, wherein the diblock copolymer has a structure in which a phase made of one block polymer component and a phase made of the other block polymer component are disposed side by side in a thickness direction.

10. The conductive member (10, 20) for electrophotographic equipment according to claim 9, wherein the diblock copolymer is a styrene-butadiene block copolymer, and a phase (17b) made of a styrene block polymer component is disposed on a phase (17a) made of a butadiene block polymer component.

11. The conductive member (10, 20) for electrophotographic equipment according to claim 10, wherein the convex unit (18) is constituted by the phase (17b) made of the styrene block polymer component of the diblock copolymer.

## Patentansprüche

1. Leitfähiges Element (10, 20) für elektrofotografische Geräte, umfassend:
eine elastische Schicht (14, 24) und eine Oberflächenschicht (16, 26), die auf einer Außenumfangsfläche der elastischen Schicht (14, 24) gebildet ist,
eine Vielzahl von konvexen Einheiten (18), die auf einer Außenumfangsfläche der Oberflächenschicht (16, 26) gebildet sind,
wobei eine Spitze der konvexen Einheit (18) durch eine gekrümmte Oberfläche gebildet ist,
wobei eine Höhe (h) der konvexen Einheit (18) 1,0 nm oder mehr und 10 nm oder weniger beträgt,
wobei eine Breite (W) der konvexen Einheit (18) 1,0 nm oder mehr und 100 nm oder weniger beträgt, und
wobei eine Größe der Breite (W) der konvexen Einheit (18) in Bezug auf einen Abstand (d) zwischen den konvexen Einheiten (18) 0,5 oder mehr und 1,5 oder weniger beträgt.

2. Leitfähiges Element (10, 20) für elektrofotografische Geräte nach Anspruch 1, wobei die konvexe Einheit (18) halbkugelförmig ist.

3. Leitfähiges Element (10, 20) für elektrofotografische Geräte nach Anspruch 1 oder 2, wobei die Oberflächenrauheit Ra der Oberflächenschicht (16, 26) 0,5 nm oder mehr und 10 nm oder weniger beträgt.

4. Leitfähiges Element (10, 20) für elektrofotografische Geräte nach einem der Ansprüche 1 bis 3, wobei der Abstand (d) zwischen den konvexen Einheiten (18) 1,0 nm oder mehr und 100 nm oder weniger beträgt.

5. Leitfähiges Element (10, 20) für elektrofotografische Geräte nach einem der Ansprüche 1 bis 4, wobei die Oberflächenschicht (16, 26) aus einem Styrol-Butadien-Blockcopolymer hergestellt ist.

6. Leitfähiges Element (10, 20) für elektrofotografische Geräte nach Anspruch 5, wobei ein Styrolgehalt des Styrol-Butadien-Blockcopolymers 71 Massenprozent oder mehr und 85 Massenprozent oder weniger beträgt und ein Styrolblockcopolymergehalt des Styrol-Butadien-Blockcopolymers 40 Mol-% oder mehr und 75 Mol-% oder weniger beträgt.

7. Leitfähiges Element (10, 20) für elektrofotografische Geräte nach einem der Ansprüche 1 bis 6, wobei die Oberflächenschicht (16, 26) Ruß enthält.

8. Leitfähiges Element (10, 20) für elektrofotografische Geräte nach einem der Ansprüche 1 bis 7, wobei die Oberflächenschicht (16, 26) aus einem selbstorganisierten Film eines Diblock-Copolymers gebildet ist.

9. Leitfähiges Element (10, 20) für elektrofotografische Geräte nach Anspruch 8, wobei das Diblock-Copolymer eine Struktur aufweist, bei der eine durch eine Blockpolymerkomponente hergestellte Phase und eine durch die andere Blockpolymerkomponente hergestellte Phase in einer Dickenrichtung nebeneinander angeordnet sind.

10. Leitfähiges Element (10, 20) für elektrofotografische Geräte nach Anspruch 9, wobei das Diblock-Copolymer ein Styrol-Butadien-Blockcopolymer ist und eine aus einer Styrol-Blockpolymerkomponente hergestellte Phase (17b) auf einer Phase (17a) angeordnet ist, die durch eine Butadien-Blockpolymerkomponente hergestellt ist.

11. Leitfähiges Element (10, 20) für elektrofotografische Geräte nach Anspruch 10, wobei die konvexe Einheit (18) aus der Styrol-Blockpolymerkomponente des Diblock-Copolymers gebildete Phase (17b) hergestellt ist.

## Revendications

1. Élément conducteur (10, 20) pour équipement électrophotographique, comprenant :
une couche élastique (14, 24) et une couche superficielle (16, 26) formée sur une surface périphérique extérieure de la couche élastique (14, 24),
une pluralité d'unités convexes (18) formées sur une surface périphérique extérieure de la couche superficielle (16, 26), une pointe de l'unité convexe (18) étant formée d'une surface courbe, une hauteur (h) de l'unité convexe (18) étant comprise entre 1,0 nm et 10 nm,
une largeur (W) de l'unité convexe (18) étant comprise entre 1,0 nm et 100 nm, et le rapport entre la largeur (W) de l'unité convexe (18) et l'intervalle (d) entre les unités convexes (18) étant compris entre 0,5 et 1,5.

2. Élément conducteur (10, 20) pour équipement électrophotographique selon la revendication 1, dans lequel l'unité convexe (18) est hémisphérique.

3. Élément conducteur (10, 20) pour équipement électrophotographique selon la revendication 1 ou 2, dans lequel la rugosité de surface, Ra, de la couche superficielle (16, 26) est comprise entre 0,5 nm et 10 nm.

4. Élément conducteur (10, 20) pour équipement électrophotographique selon l'une quelconque des revendications 1 à 3, dans lequel l'intervalle (d) entre les unités convexes (18) est compris entre 1,0 nm et 100 nm.

5. Élément conducteur (10, 20) pour équipement électrophotographique selon l'une quelconque des revendications 1 à 4, dans lequel la couche superficielle (16, 26) est constituée d'un copolymère séquencé styrène-butadiène.

6. Élément conducteur (10, 20) pour équipement électrophotographique selon la revendication 5, dans lequel la teneur en styrène du copolymère séquencé styrène-butadiène est comprise entre 71 % en masse et 85 % en masse, et la teneur en copolymère séquencé styrène du copolymère séquencé styrène-butadiène est comprise entre 40 % en moles et 75 % en moles.

7. Élément conducteur (10, 20) pour équipement électrophotographique selon l'une quelconque des revendications 1 à 6, dans lequel la couche superficielle (16, 26) contient du noir de carbone.

8. Élément conducteur (10, 20) pour équipement électrophotographique selon l'une quelconque des revendications 1 à 7, dans lequel la couche superficielle (16, 26) est formée d'un film auto-organisé d'un copolymère dibloc.

9. Élément conducteur (10, 20) pour équipement électrophotographique selon la revendication 8, dans lequel le copolymère à deux blocs présente une structure dans laquelle une phase constituée d'un composant polymère d'un bloc et une phase constituée de l'autre composant polymère d'un bloc sont disposées côte à côte dans le sens de l'épaisseur.

10. Élément conducteur (10, 20) pour équipement électrophotographique selon la revendication 9, dans lequel le copolymère à blocs est un copolymère à blocs styrène-butadiène, et une phase (17b) constituée d'un composant polymère à blocs styrène est disposée sur une phase (17a) constituée d'un composant polymère à blocs butadiène.

11. Élément conducteur (10, 20) pour équipement électrophotographique selon la revendication 10, dans lequel l'unité convexe (18) est constituée par la phase (17b) formée du composant polymère à blocs styrène du copolymère dibloc.
